# EUROPEAN PATENT APPLICATION

(11) **EP 4 593 261 A1**
(43) Date of publication of application: **30.07.2025**
(21) Application number: 25154106.6
(22) Date of filing: 27.01.2025
(51) Int. Cl.: H02K 5/20, H02K 11/33, H02K 5/06, H02K 11/21, H02K 11/25, H02K 11/27

(54) **ELECTRIC POWER UNIT**

(30) Priority: 29.01.2024 US 202463626276 P
(71) Applicant: BRP-Rotax GmbH & Co. KG, 4623 Gunskirchen (AT)
(72) Inventor: SCHERMANN, Markus, 2700 Wiener Neustadt (AT); PUSCH, Gereon, 2514 Traiskirchen (AT)
(74) Representative: Murgitroyd & Company

(57) **Abstract**

An electric power unit comprises an AC electric motor, a power assembly, and a control assembly. The AC electric motor has a housing and an output shaft supported in the housing, the housing having a first end and a second end opposite the first end, the output shaft protruding from the first end. A combination of the power assembly and of the control assembly forms a DC to AC inverter. The power assembly receives DC power from a DC power source and converts the DC power into AC power. The control assembly controls a transmission of the AC power from the power assembly to the AC electric motor. The power assembly is disposed on a longitudinal side of the housing, the longitudinal side extending between the first and second ends of the housing. The control assembly is mounted on the second end of the housing.

## Description

### CROSS-REFERENCE

The present application claims priority to U.S. Provisional Patent Application No. 63/626,276, filed on January 29, 2024, the entirety of which is incorporated herein by reference.

### FIELD OF TECHNOLOGY

The present technology relates to an electric power unit, and more specifically an electric power unit having an alternative current electric motor.

### BACKGROUND

Electric and hybrid vehicles rely on the placement of electric power units in confined spaces within the vehicles. Electric power units may for example be mounted directly on drive axles of electric vehicles. Electric power units may alternatively be integrated within automatic transmissions of electric or hybrid vehicles. Such placement of the electric power units leads to important size considerations. Clearly, the more compact the power unit the better.

Alternative current (AC) electric power units used to propel electric and hybrid vehicles typically draw power from batteries via inverters that convert direct current (DC) power from the batteries to AC power, the inverters directing the AC power to electric motors. A typical inverter comprises two basic electronic units. A first electronic unit is a gate driver unit that includes high-voltage DC components that convert the DC power into AC power. A second electronic unit is a control unit that includes one or more controllers for operation of the electric motor and sensors for monitoring. Conventionally, these two electronic units are combined in a single inverter housing that is mounted to, or at least close to, the electric motor. Functions of the two electronic units can be integrated in a single board, or in a sandwiched configuration with board-to-board connectors.

Typically, this single inverter housing holding the functions of both electronic units has the general shape of a rectangular cuboid while, in contrast, the electric motor has a substantially cylindrical body. The different shapes of the single invertor housing and of the electric motor makes compact packaging difficult.

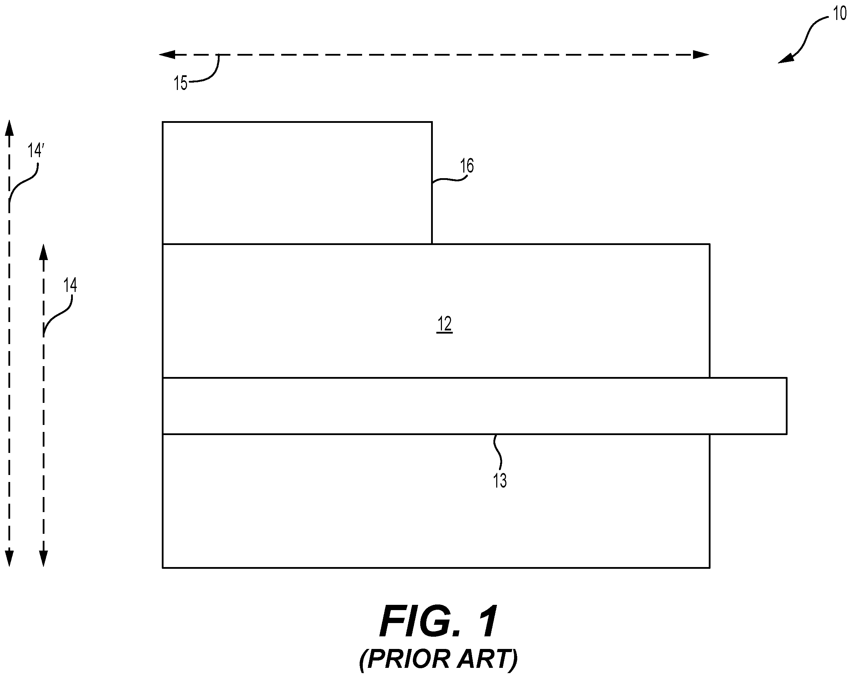

Additionally, an electric power unit 10 as shown in Figure 1 (prior art) comprises an AC electric motor 12 having a rotor shaft 13, the AC electric motor 12 having a diameter indicated by an arrow 14 and a length indicated by an arrow 15. The electric power unit 10 also includes an inverter 16 mounted on a body of the AC electric motor 12. Mounting of the inverter 16 on the AC electric motor 12 in this manner significantly increases an occupancy of the electric power unit 10 in a direction illustrated by an arrow 14', rendering the electric power unit 10 much less compact that the AC electric motor 12 itself.

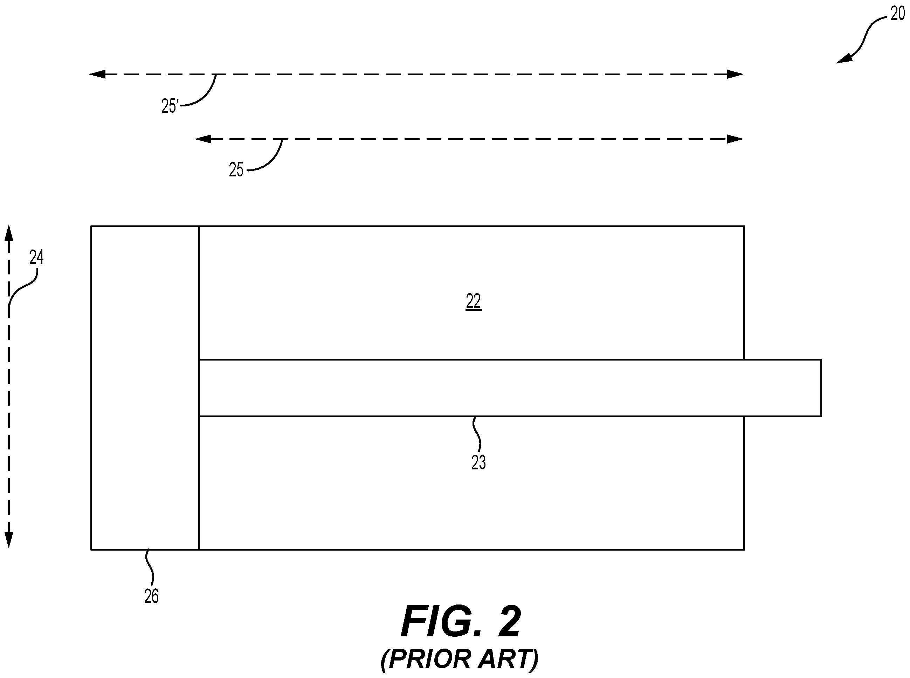

Attempts have been made at making the inverter housing in cylindrical shape and positioning the same on an axial end of the AC electric motor. For example, Figure 2 (prior art) shows an electric power unit 20 comprising an AC electric motor 22 having a rotor shaft 23, the AC electric motor 22 having a diameter indicated by an arrow 24, a length of a body of the AC electric motor 22 being indicated by an arrow 25. The electric power unit 20 also includes an inverter 26 mounted on a front end of the AC electric motor 22. Mounting of the inverter 26 on the AC electric motor 22 in this manner significantly increases a longitudinal occupancy of the electric power unit 20 as illustrated by an arrow 25'. This configuration could only increase a total axial size of the combination of the AC electric motor 22 with the housing of the inverter 26.

The configuration of conventional electric power units such as illustrated on Figures 1 and 2 also lack in terms of effectiveness of cooling of the combination of the inverters and of the AC electric motors. Additionally, conventional electric power units require many connectors and many wires or cables for linking the inverters and the AC electric motors.

In view of the foregoing, there is a need for a compact configuration of the AC electric motor in combination with the related inverter.

### SUMMARY

It is an object of the present technology to ameliorate at least some of the inconveniences present in the prior art.

According to one aspect of the present technology, there is provided an electric power unit, comprising: an alternative current (AC) electric motor, the AC electric motor having a housing and an output shaft supported in the housing, the housing having a first end and a second end opposite the first end, the output shaft protruding from the first end of the housing; a power assembly configured to receive direct current (DC) power from a DC power source and to convert the DC power into AC power, the power assembly being disposed on a longitudinal side of the housing, the longitudinal side extending between the first and second ends of the housing; and a control assembly configured to control transmission of the AC power from the power assembly to the AC electric motor, the control assembly being mounted on the second end of the housing.

In some embodiments of the present technology, the output shaft is a rotor shaft of the electric AC motor.

In some embodiments of the present technology, the electric power further comprises at least one AC power busbar connecting the power assembly to the AC electric motor for transmitting the AC power from the power assembly to the AC electric motor via the control assembly.

In some embodiments of the present technology, the control assembly comprises at least one AC current sensor operative to measure an AC current flowing through a corresponding one of the at least one AC power busbar.

In some embodiments of the present technology, the AC electric motor is a three-phase AC electric motor; the at least one AC power busbar is three AC power busbars, and the at least one AC current sensor is three AC current sensors.

In some embodiments of the present technology, the control assembly comprises: an interface configured to receive, from an external controller, commands for controlling the electric power unit; a control board configured to convert the commands into control signals; and a power assembly connection configured to provide the control signals to the power assembly for controlling AC power generation.

In some embodiments of the present technology, the power assembly comprises a gate driver board, the gate driver board comprising at least one pair of transistors, each transistor having a gate configured to receive respective control signals from the control assembly, each pair of transistors converting the DC power into single-phase AC power, according to the control signals, for delivery to a corresponding winding phase of the AC electric motor.

In some embodiments of the present technology, the AC electric motor is a three-phase AC electric motor; and the at least one pair of transistors is three pairs of transistors.

In some embodiments of the present technology, the AC electric motor comprises a stator; the electric power unit further comprises a cooling jacket fluidly connected to a coolant inlet and to a coolant outlet, the cooling jacket at least partially surrounding the stator; and the power assembly is positioned for permitting thermal exchange with a coolant circulating in the cooling jacket for the coolant to absorb heat generated by the gate driver board.

In some embodiments of the present technology, the cooling jacket is formed in the housing of the AC electric motor.

In some embodiments of the present technology, the power assembly further comprises a cooling component positioned between the gate driver board and the cooling jacket, the cooling component being fluidly connected to the cooling inlet, to the cooling jacket and to the cooling outlet; and the coolant circulates through the cooling component and through the cooling jacket.

In some embodiments of the present technology, the control assembly further comprises at least one sensor selected from: an AC current sensor for each phase of the AC electric motor, a rotor position sensor (RPS), a bearing temperature sensor, a rotor front end temperature sensor, a winding head temperature sensor, and an acceleration sensor; each sensor of the at least sensor is operatively connected to the control board; and the control board is further configured to cause the interface to transmit measurements from the at least one sensor to the external controller.

In some embodiments of the present technology, the power assembly and the control assembly are contained in a common enclosure extending over at least a part of the longitudinal side of the housing and over at least a part of the second end of the housing.

Embodiments of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a schematic, side elevation view of a prior art electric power unit;
Figure 2 is a schematic, side elevation view of another prior art electric power unit;
Figure 3 is a schematic, side elevation view of an electric power unit in accordance with an embodiment of the present technology;
Figure 4 is a schematic, rear elevation view of a control assembly mounted on a front end the electric power unit of Figure 3;
Figure 5 is a schematic view of some of the electrical components of the electric power unit of Figure 3;
Figure 6 is a left, side elevation view of the electric power unit of Figure 3;
Figure 7 is a front elevation view of the electric power unit of Figure 3;
Figure 8 is a right, side elevation view of the electric power unit of Figure 3;
Figure 9 is a top plan view of the electric power unit of Figure 3;
Figure 10 is a front, left perspective view of the electric power unit of Figure 3;
Figure 11 is another front, left perspective view of the electric power unit of Figure 3, with covers for the power assembly and for the control assembly removed;
Figure 12 is yet another front, left perspective view of the electric power unit of Figure 3, with a high-voltage DC connection removed, showing details of a gate driver board;
Figure 13 is another front elevation view of the electric power unit of Figure 3, with the cover for the control assembly removed, showing details of a control board;
Figure 14 is yet another front elevation view of the electric power unit of Figure 3, with a control board and the cover for the control assembly removed, showing details of a current sensor and of AC power busbars; and
Figure 15 is a top plan view of the electric power unit of Figure 3, with the cover for the power assembly removed, showing components of a gate driver board.

Unless otherwise indicated, the various Figures are not to scale.

### DETAILED DESCRIPTION

The present technology will be described with respect to an electric power unit comprising a three-phase alternative current (AC) electric motor. However, it is contemplated that the present technology could be applied to power units including other types of AC electric motors, for example six-phase AC electric motors. The electric power unit may be used, for example, in an electric vehicle. Alternatively, the electric power unit may be used in a hybrid vehicle using an internal combustion engine as a supplemental power unit. Application of the present technology is however not intended to be limited to its use in vehicles. While an intended use of the present technology is for propulsion of an electric or hybrid vehicle, the present technology can also be used for other applications that benefit from compact packaging of the electric power unit.

In an aspect of the present technology, an electric power unit comprises an AC electric motor, a power assembly, and a control assembly. The AC electric motor has a housing and an output shaft supported in the housing. A combination of the power assembly and of the control assembly forms a DC to AC inverter. The power assembly receives DC power from a DC power source and converts the DC power into AC power. The control assembly controls the AC current supplied from the power assembly to the AC electric motor. The power assembly is disposed on a longitudinal side of the housing, the longitudinal side extending between opposite ends of the housing. The control assembly is mounted on one end of the housing. Respective positions of the power assembly and of the control assembly provide a compact integration of the inverter in the electric power unit.

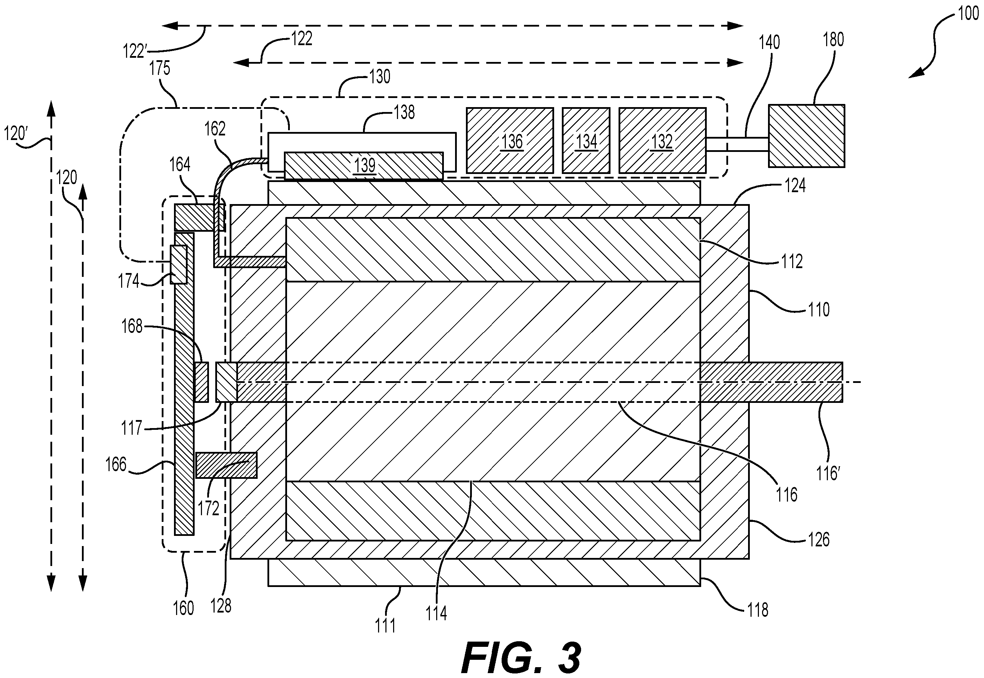

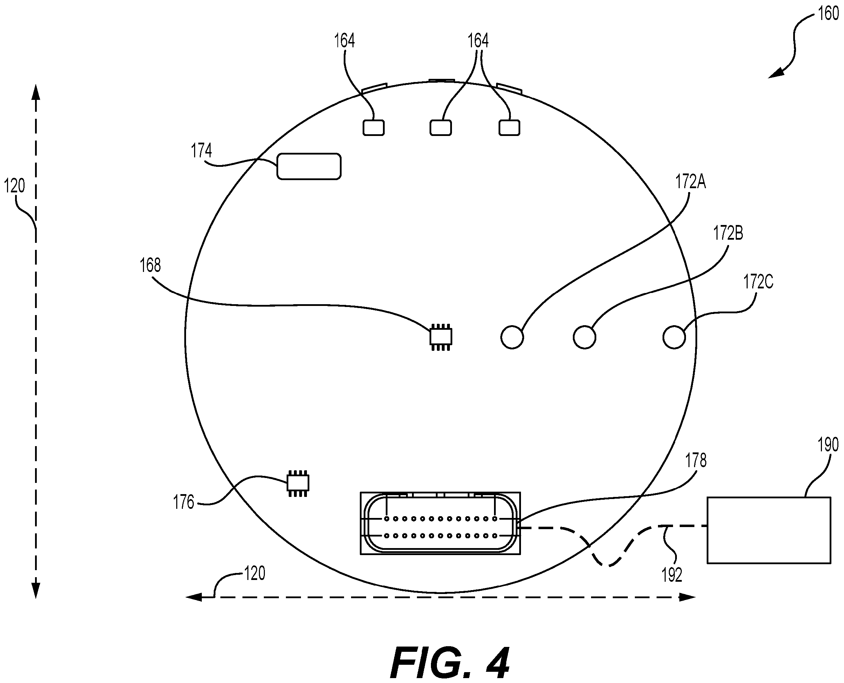

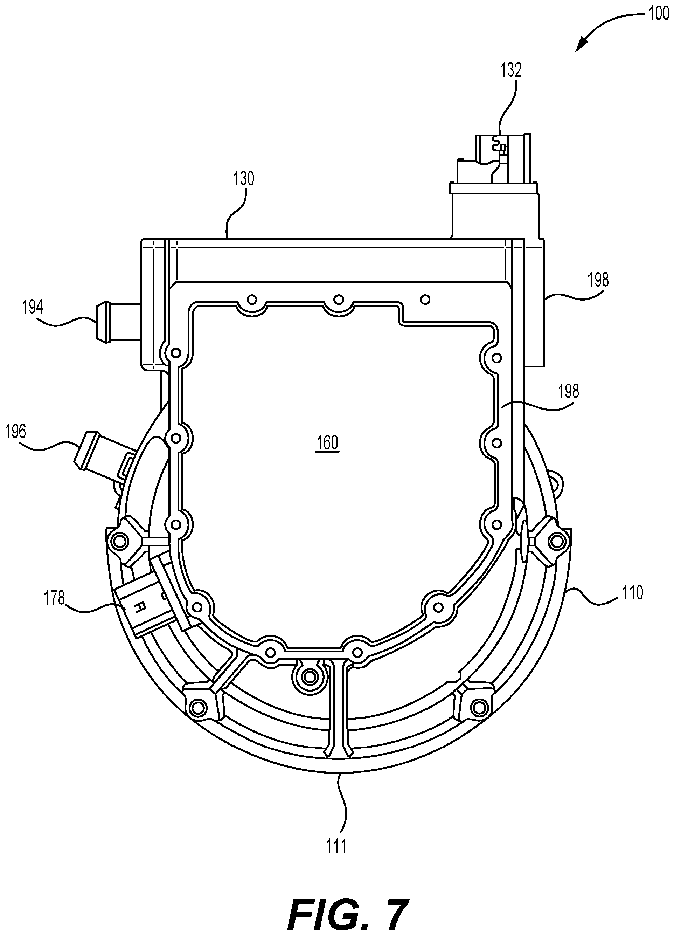

Referring now to the drawings, an electric power unit 100 including an AC electric motor 110 and related electronic components in accordance with non-limiting embodiments of the present technology is shown in Figures 3 and 4. The following description relates to one example in which the AC electric motor 110 is a three-phase AC electric motor. Those of ordinary skill in the art will recognize that there are other known types of AC electric motors incorporating different designs and that the present technology would encompass these other AC electric motors. The AC electric motor 110 (a simplified cross-section thereof being illustrated) includes a housing 111 having a generally cylindrical shape, the housing 111 having a first end (rear end 126) and a second end (front end 128) opposite the first end. The AC electric motor 110 includes a stator 112, a rotor 114 having a rotor shaft 116, and an output shaft supported in the housing 111 and protruding the first end of the housing 111 for connection to a drive axle of a vehicle (not shown) or another load (not shown). In the non-limiting embodiment as shown in Figure 3, the output shaft is the rotor shaft 116, its rear end 116' protruding the first end of the housing 111. The stator 112 of the AC electric motor 110 is at least partially surrounded by a cooling jacket 118. The cooling jacket 118 is fluidly connected, via a coolant inlet 194 and a coolant outlet 196 (Figure 7), to a coolant reservoir (not shown) and to a coolant pump (not shown) circulating a coolant in the cooling jacket 118. The cooling jacket 118 is formed in walls of the housing 111 of the AC electric motor 110. It is contemplated that in some embodiments, the cooling jacket 118 could be omitted. Arrow 120 illustrates a diameter of the housing 111 of the AC electric motor 110, including the cooling jacket 118, and arrow 122 illustrates a length of the housing 111 of the AC electric motor 110, between the rear end 126 and the front end 128. The electric power unit 100 also includes a power assembly 130 and a control assembly 160. In the present non-limiting embodiment, the power assembly 130 includes a gate driver board (GDB) 138 and the control assembly 160 includes a control board (CB) 166. The power assembly 130 and the control assembly 160 collectively form an inverter for converting direct current (DC) power from an external DC power source, for example a battery 180, to AC power for delivery to the AC electric motor 110.

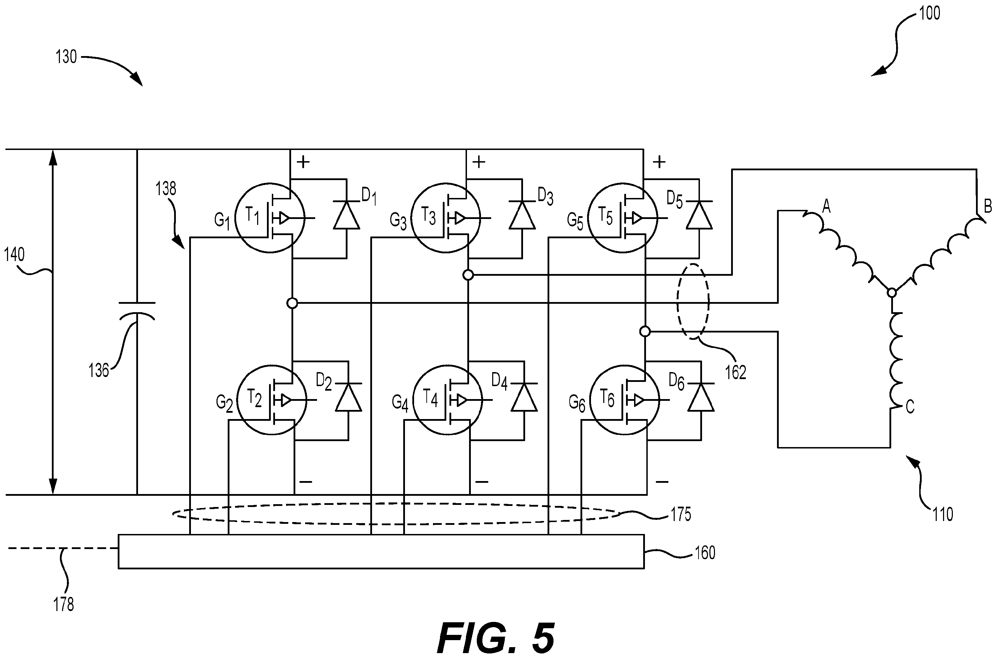

The power assembly 130 is configured to convert the DC power from the battery 180 into AC power. The power assembly 130 is disposed on a longitudinal side 124 of the housing 111 of the AC electric motor 110, the longitudinal side 124 extending between the rear end 126 and the front end 128 of the housing 111. The power assembly 130 extends along the whole or a part of the length 122 of the housing 111 of the AC electric motor 110. The power assembly 130 comprises a high-voltage DC connection 132 for receiving DC power from a DC bus 140 connected to battery 180 that supplies DC power to the power assembly 130 via the DC bus 140. The power assembly 130 also comprises a high-voltage DC filter 134 and a DC link capacitor 136 for attenuating eventual transients generated in the DC to AC conversion, as well as the GDB 138 that includes three half-bridges having low-side transistors T₂, T₄ and T₆ connected to a negative side (labelled with `-` signs) of the DC bus 140 and high side transistors Ti, T₃ and T₅ connected to a positive side (labelled with '+' signs) of the DC bus 140, the GDB 138 actually generating the AC power from the DC power. More details of the GDB 138 are described in relation to Figure 5, below. In a non-limiting embodiment, a cooling component 139, for example a pin fin array, is in direct contact with a board supporting the GDB 138 and fluidly connected to the cooling inlet 196, to the cooling jacket 118 and to the cooling outlet 196. Some of these components of the power assembly 130 may not be present in some embodiments of the electric power unit 100.

The control assembly 160 is mounted axially on the AC electric motor 110, being placed on the front end 128 (i.e., a front face) of the housing 111 of the AC electric motor 110. As illustrated in Figure 3, the control assembly 160 has a diameter that substantially matches a diameter of the AC electric motor 110, exclusive of the cooling jacket 118. Alternatively, a circular perimeter of the control assembly 160 matches a circular perimeter of a combination of the AC electric motor 110 and of the cooling jacket 118. In other embodiments, the periphery of the control assembly 160 may have other shapes and/or may be somewhat larger or smaller than the front end 128 of the AC electric motor 110. The power assembly 130 is connected to the AC electric motor 110 via AC power busbars 162 that pass near or through the control assembly 160. Three AC power busbars 162 are present when the AC electric motor 110 is a three-phase AC electric motor. One contactless AC current sensor 164 is provided in the control assembly 160 for each of the AC power busbars 162. The control assembly 160 comprises the CB 166, a rotor position sensor (RPS) 168, and sensors, including at least one motor temperature sensor 172 that measures internal temperatures of rotating components of the AC electric motor 110. Functions of the CB 166, of the RPS 168, and of the at least one motor temperature sensor 172 are described hereinbelow.

As best seen in Figure 4, in a non-limiting embodiment, the control assembly 160 includes three AC current sensors 164 for three phases AC power, the RPS 168, and the temperature sensors 172 including a bearing B-side temperature sensor 172A, a rotor front end temperature sensor 172B, and a winding head temperature sensor 172C. In a non-limiting embodiment, the temperature sensors 172A, 172B and 172C are infrared sensors. It is contemplated that some embodiments may include fewer sensors than as illustrated on Figure 4 and that some other embodiments may include additional sensors not described herein. The control assembly 160 also includes a power assembly connection comprising a GDB connection port 174 and a flat cable 175 for connecting the control assembly 160 to the GDB 138. The control assembly 160 further includes an acceleration sensor 176 that can monitor shocks for malfunction analysis, and an interface in the form of a low voltage connection 178 operatively connected via a low voltage connection 192, for example a controller area network (CAN) bus, to an external controller 190 for the electric power unit 100. All sensors, the GDB connection port 174 and the low voltage connection 178 are operatively connected to the CB 166.

Additional details of the AC power unit 100, including details of the GDB 138, are shown in Figure 5. The GDB 138 includes a three-phase bridge that provides AC power over three AC power busbars 162 to the AC electric motor 110. Conversion of DC power to AC power is directed via commands provided by the external controller 190 to the control assembly 160 at the low voltage connection 178. These commands control an operation of the electric power unit 100. In turn, the CB 166 of the control assembly 160 converts these commands into control signals, for example pulse width modulation signals at a 10 kHz rate. The control signals are sequentially applied via the GDB connection port 174 and the flat cable 175 to power switches of the GDB 138 for control of AC power generation. In the shown embodiment, the control signals are applied to gates Gi-Ge of the transistors T₁-T₆. As shown in Figure 5, the GDB 138 also includes freewheel diodes D₁-D₆ that are used to attenuate transient overvoltage that occurs upon switching on and off of the transistors T₁-T₆. The AC motor 110 has three winding phases A, B and C, connected in a star arrangement. Each one of the winding phases A, B and C is connected via a corresponding AC busbar 162 to a corresponding pair of the transistors T₁-T₆.

Returning to Figures 3 and 4, mounting the power assembly 130 longitudinally on the housing 111 of the AC electric motor 110 causes a dimension of a combination of the AC electric motor 110 and of the power assembly 130, as illustrated by arrow 120', to extend beyond the diameter 120 of the AC electric motor 110 itself. As best seen in Figure 4, this dimension 120' only extends over a minor part of the circumference of the AC electric motor 110. The power assembly 130 has a width *w* extending perpendicular to the length 120 defined between the rear end 126 and the front end 128 of the housing 111 of the AC electric motor 110. In an embodiment, this width *w* is smaller than the diameter of the AC electric motor 110. Similarly, as best seen in Figure 3, mounting the control assembly 160 on the front end 128 of the housing 111 of the AC electric motor 110 causes a length of a combination of the housing 111 of the AC electric motor 110 and of the control assembly 160, as illustrated by arrow 122', to extend beyond the length 122 of the housing 111 of the AC electric motor 110 itself. Regardless, the resulting electric power unit 100 is still more compact than combinations in which the complete inverter, including all components of the power assembly 130 and of the control assembly 160, would be mounted on the longitudinal side 124 of the AC electric motor 110 (as in the case of configuration shown in Figure 1), or on the front end 128 of the AC electric motor 110 (as in the case of the configuration shown in Figure 2). Otherwise stated, a ratio of the dimension 120' over the diameter 120 of the AC electric motor 110 is less than a ratio of the dimension 14' over the diameter 14 of the AC electric motor 12 shown in Figure 1. Similarly, a ratio of the dimension 122' over the length 122 of the housing 111 of the AC electric motor 110 is less than a ratio of the dimension 25' over the length 25 of the housing 111 of the AC electric motor 22 shown in Figure 2.

It may be noted that components of the power assembly 130, in particular the transistors T₁-T₆, of the GDB 138, generate a significant amount of heat when the power unit 100 is in operation. The cooling jacket 118 being disposed peripherally in the housing 111 of the AC electric motor 110, the power assembly 130 is therefore in contact with, or at least positioned proximally to, the cooling jacket 118. The power assembly 130 is thus positioned for permitting thermal exchange with the cooling jacket 118 that can absorb at least a significant portion of the heat generated by the GDB 138. In some embodiments, the coolant circulating in the cooling jacket 118 may provide sufficient cooling to dissipate heat generated by the AC electric motor 110 as well as the additional heat generated by the power assembly 130, so that additional cooling equipment may become unnecessary because of the position of the power assembly 130 near the cooling jacket 118.

The AC current sensors 164, the CB 166, the RPS 168, the temperature sensors 172A, 172B, 172C, the GDB connection port 174, the acceleration sensor 176, and the low voltage connection 178 are compactly integrated within the control assembly 160. This construction of the control assembly 160 limits the need for expensive and fault prone wiring or cabling and connectors between these components, also allowing to place the various sensors in close proximity to components of the AC electric motor 110 that are monitored by these sensors. In a non-limiting embodiment, the RPS 168 is an inductive or magnetic sensor mounted directly in front of a target wheel 117 placed at a front end of the rotor shaft 116 opposite from the rear end 116', so that the rotating speed of the rotor shaft 116 can be measured by the RPS 168 with high accuracy. Monitoring of precise measurements from these sensors 164, 168, 172A, 172B, 172C and 176 by sending of measurement data via the low voltage connection 178 to the external controller 190 provides for precise torque measurement, advanced detection of faults, and improved efficiency of the electric power unit 100, allowing the electric power unit 100 to be operated close to its maximum power rating with minimal risk of failure.

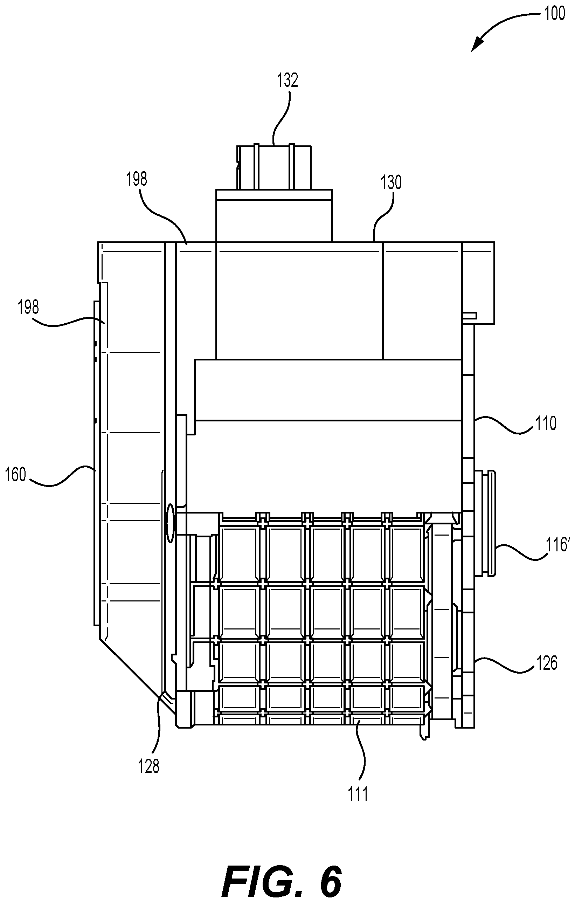

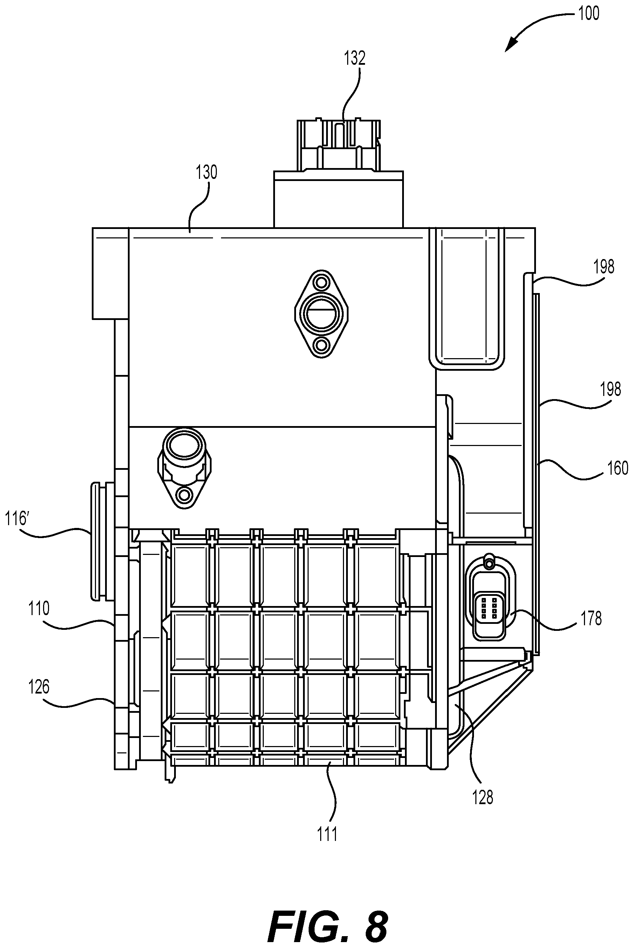

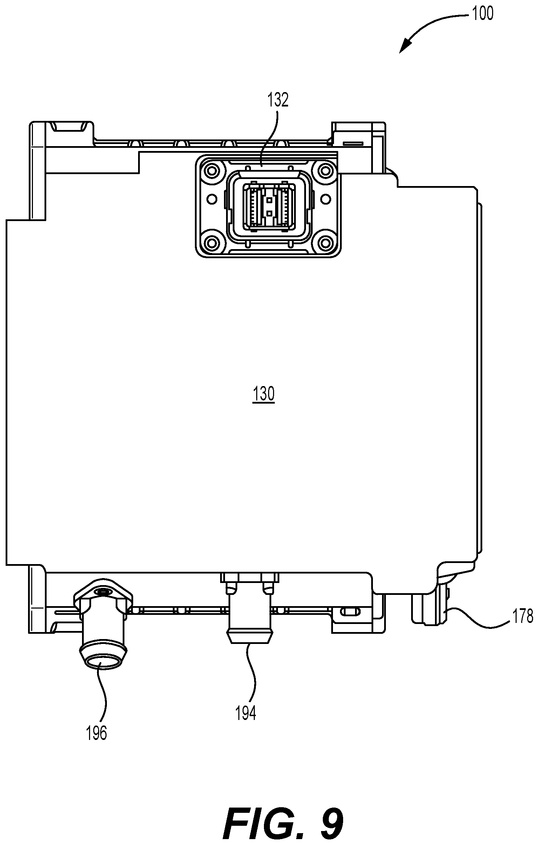

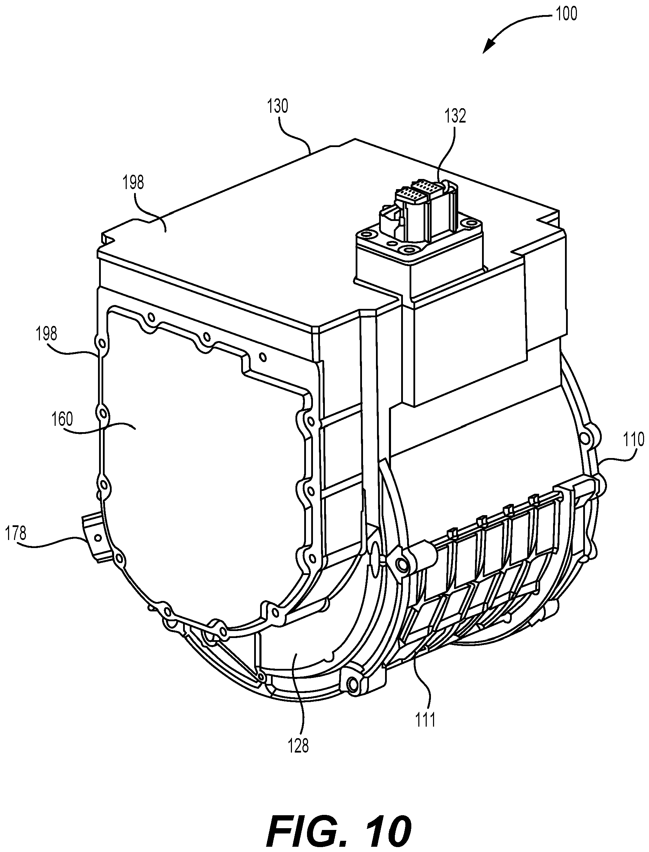

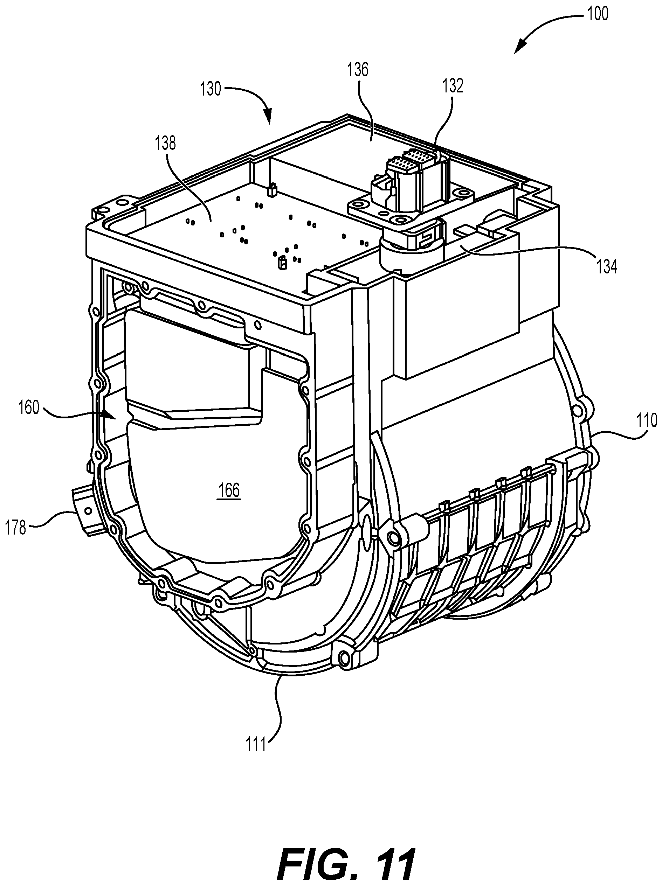

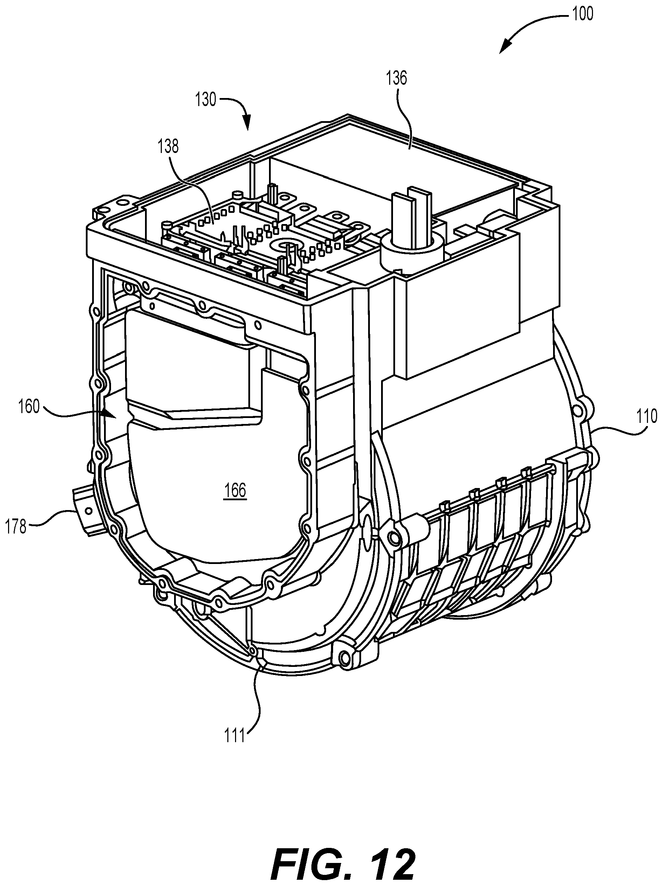

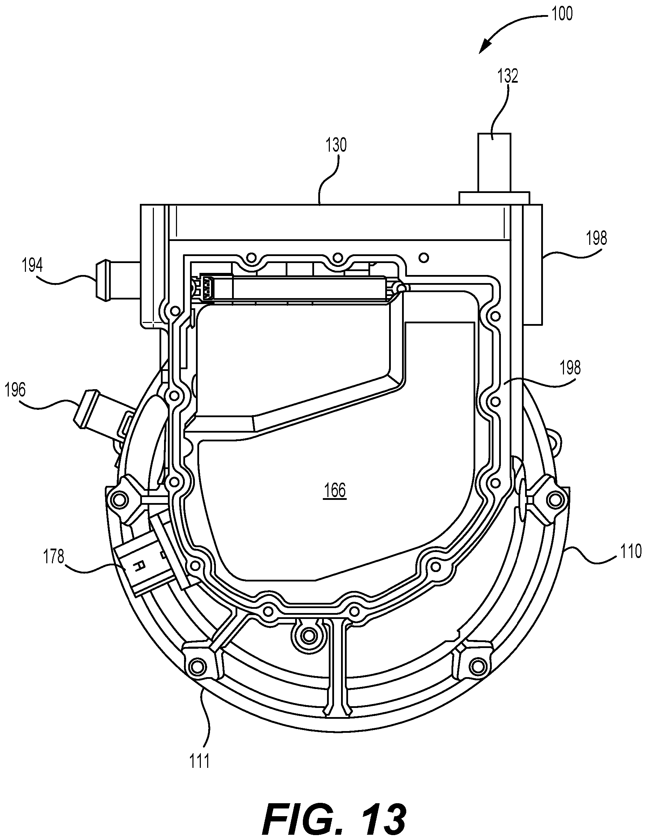

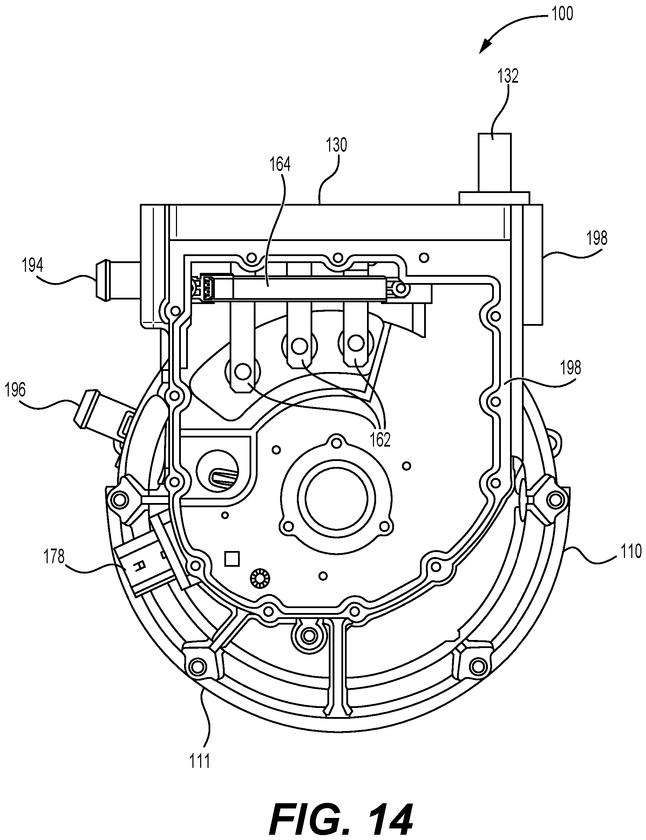

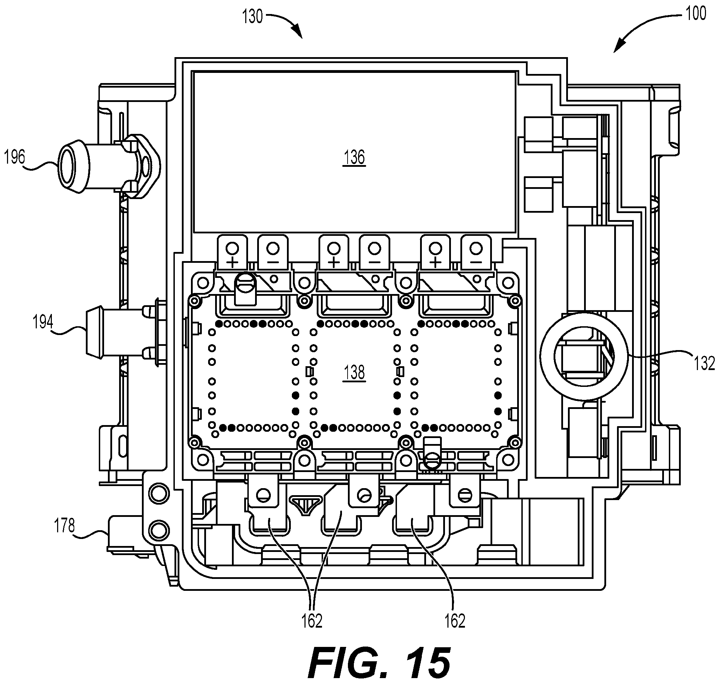

Figures 6 to 15 provide constructional details of the electric power unit 100. The relative sizes and positions of the various components of the electric power unit 100 may vary in other embodiments. In this embodiment, the power assembly 130 and the control assembly 160 are contained in a common enclosure 198 having a L-shaped cross-section and extending over the longitudinal side 124 of the housing and the front end of the housing 111. It is contemplated that the common enclosure 198 may be formed integrally with the housing 111 and may have removable covers (not labelled).

Figures 7 and 13 to 15 reveal that, in this embodiment, the coolant inlet 194 is connected to a body of the power assembly 130 and that the cooling outlet 196 is connected to the cooling jacket 118. In this manner, the coolant circulates through the cooling component 139 for cooling the components of the GDB 138 first, and then through the cooling jacket 118.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. An electric power unit (100), comprising:
an alternative current (AC) electric motor (110), the AC electric motor (110) having a housing (111) and an output shaft (116) supported in the housing (111), the housing (111) having a first end (126) and a second end (128) opposite the first end, the output shaft (116) protruding from the first end (126) of the housing (111);
a power assembly (130) configured to receive direct current (DC) power from a DC power source (180) and to convert the DC power into AC power, the power assembly (130) being disposed on a longitudinal side (124) of the housing (111), the longitudinal side (124) extending between the first and second ends (126, 128) of the housing (111); and
a control assembly (160) configured to control transmission of the AC power from the power assembly (130) to the AC electric motor (110), the control assembly (160) being mounted on the second end (128) of the housing (111).

2. The electric power unit (100) of claim 1, wherein the output shaft (116) is a rotor shaft of the electric AC motor (110).

3. The electric power unit (100) of claim 1 or 2, further comprising at least one AC power busbar (162) connecting the power assembly (130) to the AC electric motor (110) for transmitting the AC power from the power assembly (130) to the AC electric motor (110) via the control assembly (160).

4. The electric power unit (100) of claim 3, wherein the control assembly (160) comprises at least one AC current sensor (164) operative to measure an AC current flowing through a corresponding one of the at least one AC power busbar (162).

5. The electric power unit (100) of claim 4, wherein:
the AC electric motor (110) is a three-phase AC electric motor;
the at least one AC power busbar (162) is three AC power busbars, and
the at least one AC current sensor (164) is three AC current sensors.

6. The electric power unit (100) of any one of claims 1 to 5, wherein the control assembly (160) comprises:
an interface (178) configured to receive, from an external controller (190), commands for controlling the electric power unit (100);
a control board (166) configured to convert the commands into control signals; and
a power assembly (130) connection configured to provide the control signals to the power assembly (130) for controlling AC power generation.

7. The electric power unit (100) of claim 6, wherein the power assembly (130) comprises a gate driver board (138), the gate driver board (138) comprising at least one pair of transistors (T₁ - T₆), each transistor (T₁ - T₆) having a gate (Gi-Ge) configured to receive respective control signals from the control assembly (160), each pair of transistors (T₁ - T₆) converting the DC power into single-phase AC power, according to the control signals, for delivery to a corresponding winding phase of the AC electric motor (110).

8. The electric power unit (100) of claim 7, wherein:
the AC electric motor (110) is a three-phase AC electric motor; and
the at least one pair of transistors (T₁ - T₆) is three pairs of transistors.

9. The electric power unit (100) of claim 7 or 8, wherein:
the AC electric motor (110) comprises a stator (112);
the electric power unit (100) further comprises a cooling jacket (118) fluidly connected to a coolant inlet (194) and to a coolant outlet (196), the cooling jacket (118) at least partially surrounding the stator (112); and
the power assembly (130) is positioned for permitting thermal exchange with a coolant circulating in the cooling jacket (118) for the coolant to absorb heat generated by the gate driver board (138).

10. The electric power unit (100) of claim 9, wherein the cooling jacket (118) is formed in the housing (111) of the AC electric motor (110).

11. The electric power unit (100) of claim 9 or 10, wherein:
the power assembly (130) further comprises a cooling component (139) positioned between the gate driver board (138) and the cooling jacket (118), the cooling component (139) being fluidly connected to the cooling inlet (194), to the cooling jacket (118) and to the cooling outlet (196); and
the coolant circulates through the cooling component (139) and through the cooling jacket (118).

12. The electric power unit (100) of any one of claims 6 to 11, wherein:
the control assembly (160) further comprises at least one sensor selected from:
an AC current sensor (164) for each phase of the AC electric motor,
a rotor position sensor (RPS) (168),
a bearing temperature sensor (172A),
a rotor front end temperature sensor (172B),
a winding head temperature sensor (172C), and
an acceleration sensor (176);
each sensor of the at least sensor is operatively connected to the control board (166); and
the control board (166) is further configured to cause the interface to transmit measurements from the at least one sensor to the external controller (190).

13. The electric power unit (100) of any one of claims 1 to 12, wherein the power assembly (130) and the control assembly (160) are contained in a common enclosure (198) extending over at least a part of the longitudinal side (124) of the housing (111) and over at least a part of the second end (128) of the housing (111).
